# EUROPÄISCHE PATENTSCHRIFT

(11) **EP 2 824 168 B1**
(45) Veröffentlichungstag und Bekanntmachung des Hinweises auf die Patenterteilung: **23.09.2015**
(21) Anmeldenummer: 13003435.8
(22) Anmeldetag: 08.07.2013
(51) Int. Cl.: C11B 3/00, C11B 3/16, C11B 11/00, C11B 15/00, A01K 59/06

(54) **Verfahren und Vorrichtung zum Aufreinigen von Bienenwachs**
Method and device for the purification of beeswax
Procédé et dispositif de nettoyage de cire d'abeille

(43) Veröffentlichungstag der Anmeldung: 14.01.2015
(73) Patentinhaber: Gerster, Hardy, 88326 Aulendorf (DE)
(72) Erfinder: Gerster, Hardy, 88326 Aulendorf (DE)
(74) Vertreter: Otten, Roth, Dobler & Partner

(56) Entgegenhaltungen:
- EP-A2- 0 524 534
- EP-B1- 1 260 573
- WO-A2-2008/049598
- DE-A1- 19 609 003
- FR-A1- 2 560 746
- US-A- 1 808 755
- US-A- 2 108 282
- US-A- 2 383 629
- DATABASE WPI Week 200861 Thomson Scientific, London, GB; AN 2008-K19307 XP002717081, HONG ZHANG, CHEN JUN, HUA ZHENG, ZHIYONG CHEN, LONG SUN, XIAOMING CHEN: "Refining method for insect wax", & CN 101 225 345 A (RES INST RESOURCES INSECTS CHINESE ACAD) 23. Juli 2008 (2008-07-23)
- DATABASE WPI Week 200905 Thomson Scientific, London, GB; AN 2009-A92764 XP002717082, TANG X: "Method for preparing wax tree wax with wax tree seed", & CN 101 319 168 A (TANG X) 10. Dezember 2008 (2008-12-10)

## Beschreibung

Die Erfindung betrifft ein Verfahren und eine Vorrichtung zum Aufreinigen von Bienenwachs.

Es besteht allgemein die Problematik, dass Rückstände und Verunreinigungen im Bienenwachs anzutreffen sind. Unter anderem handelt es sich bei diesen Verunreinigungen um Schädlingsbekämpfungsmittel bzw. um Arzneimittel, die auf unterschiedliche Weise in die Natur gelangt sind und insbesondere auch im Zusammenhang mit Bienen- und Brutparasiten zu deren Bekämpfung eingesetzt werden, etwa bei der Bekämpfung von Milben. In der EP 1 260 573 B1 wird daher zum Beispiel beschrieben, dass speziell der Wirkstoff Coumafos auch mit pulverförmiger Aktivkohle abgetrennt werde kann, wobei jedoch aufwendige Filtrierschritte notwendig sind und dieses Verfahren im Übrigen nicht die gewünschte Wirksamkeit erzielen konnte.

Aufgabe der Erfindung ist es, ein Verfahren bzw. eine Vorrichtung bereitzustellen, das bzw. die eine verbesserte Aufreinigung von Bienenwachs für eine möglichst breite und umfassende Palette an Verunreinigungen und Schadstoffen bieten kann/können.

Die Aufgabe wird, ausgehend von einem Verfahren zum Aufreinigen von Bienenwachs der eingangs genannten Art durch die Merkmale des Anspruchs 1 bzw. des Anspruchs 10 gelöst.

Durch die in den abhängigen Ansprüchen genannten Maßnahmen sind vorteilhafte Ausführungen und Weiterbildungen der Erfindung möglich.

Dementsprechend umfasst das erfindungsgemäße Verfahren zum Aufreinigen von Bienenwachs folgende Verfahrensschritte: Das feste Roh-Bienenwachs wird geschmolzen, damit es besser verarbeitet bzw, gereinigt werden kann. Die eigentliche Aufreinigung bzw. Filtrierung geschieht in wenigstens zwei Schritten, wobei zunächst ein erstes Filter eingesetzt wird, um Stoffe ab einer bestimmten Korngröße vom Bienenwachs zu trennen. Das durch das erste Filter filtrierte Bienenwachs wird später in einem weiteren Schritt durch ein zweites Filter filtriert welches Aktivkohle enthält, wobei die Aktivkohle in wenigstens einer Kammer des zweiten Filters bevorratet ist. Das Bienenwachs wird dabei unter Aufwendung eines gewissen Drucks durch die Kammer des zweiten Filters hindurchgedrückt. Die Kammer umfasst entsprechende Öffnungen zum Ein- und Auslass.

Die Aktivkohle wiederum kann zum Beispiel als Granulat in der bzw. den Kammern bevorratet sein. Zur Ausübung des mechanischen Drucks wiederum kann es je nach Viskosität des Bienenwachses bereits ausreichen, dieses mittels Schwerkraft hindurchfließen zu lassen. Aufgrund der grundsätzlich hohen Viskosität des Bienenwachses ist es jedoch vorteilhaft, das geschmolzene Bienenwachs durch das zweite Filter hindurchzudrücken.

Eine Kammer im Sinne der Erfindung kann jegliche Haltevorrichtung oder jegliches Behältnis sein, das der Bevorratung von Aktivkohle dient. Da Aktivkohle regelmäßig als Granulat eingesetzt wird, kann die Kammer beispielsweise eine Art Kartusche darstellen, die vom Bienenwachs bzw. von anderen Flüssigkeiten durchflossen werden kann.

Ein wesentlicher Vorteil des Filtrierens mit dem ersten Filter besteht darin, dass vergleichsweise grobe Bestandteile herausgefiltert werden und nicht im zweiten Filter, welches durchflossen werden muss, hängen bleiben. Somit kann einer Verschmutzung, einer Verstopfung bzw. einem Ausfall des zweiten Filters vorgebeugt werden. Zudem wird darauf verwiesen, dass grobkörnige Stoffe ohnehin in der Regel nicht durch das zweite Filter herausfiltriert werden sollen (auch wenn das zweite Filter grundsätzlich dazu imstande sein kann). Denn diese Funktion kommt im Wesentlichen dem ersten Filter zu.

Aktivkohle, wie sie im zweiten Filter bevorratet ist, besitzt eine hochporöse Struktur. Für die Filtriereigenschaften mittels Adsorption sind in der Regel Poren in der Größe bis ca. 50 nm (50 Nanometer) verantwortlich. Ein großer Vorteil von Aktivkohle besteht darin, dass sie thermisch reaktivierbar ist. Auch eine biologische Reaktivierung ist gegebenenfalls möglich. Die Verwendung von Aktivkohlefiltern beim erfindungsgemäßen Verfahren hat daher nicht nur den Vorteil, dass die Filter eine einfache Handhabung aufweisen und nach einigem Gebrauch durch einfache Handhabung entnommen und thermisch aktiviert werden können, sondern es ist auch nicht notwendig, die Aktivkohle aus dem geschmolzenen Bienenwachs herauszufiltern.

Die Zugabe von pulverisierter Aktivkohle, wie es bislang im Stand der Technik üblich war, hat nur zu unzureichenden Filtrierergebnissen geführt, da die Aktivkohle oftmals "verstopfte" und keine Filtrierung mehr möglich war. Ein Großteil des Bienenwachses schloss die pulverisierte Aktivkohle ein, verklebte diese und machte die Aktivkohle praktisch unwirksam. Verfahren die das Vermischen des Wachses mit Aktivkohle als Adsorptionsmedium anwenden sind zum Beispiel in CN101319168, US 2,108,282, US 2,383,629 und WO 2008/049598 beschrieben. Verfahren die andere Adsorptionsmedien verwenden werden zum Beispiel in CN101225345, US 1,808,755 und EP 0 524 534 beschrieben. Zudem wurde es bislang regelmäßig versäumt, ein Vorfiltrieren, wie dies beim erfindungsgemäßen Verfahren mittels des ersten Filters erreicht wird, durchzuführen, sodass Grobpartikel die Aktivkohle behindern konnten und somit zu einer wesentlichen Verschlechterung des Reinigungsergebnisses geführt haben. Ein wesentlicher Vorteil des erfindungsgemäßen Verfahrens besteht auch darin, dass praktisch das gesamte Bienenwachs mit der Aktivkohle in Berührung kommt, während bei einer bloßen Zugabe von Aktivkohlepulver man darauf angewiesen ist, dass durch ständiges Vermengen sowie durch Zugabe von ausreichend Pulver möglichst große Mengen an Bienenwachs im Laufe der Zeit mit der Aktivkohle in Berührung kommen. Je mehr Aktivkohlepulver jedoch hinzugefügt wird und je kleiner die Aktivkohlebestandteile sind, desto schwieriger wird das Herausfiltrieren der Aktivkohle, sobald diese nicht mehr benötigt wird. Da gegenüber dem bisherigen Stand der Technik dieser aufwendige abschließende Filtrierungsschritt entfällt, kann das erfindungsgemäße Verfahren darüber hinaus auch kostengünstiger durchgeführt werden.

Die Funktion des ersten Filters besteht im Wesentlichen darin, verschiedenartigste Stoffe einer bestimmten Korngröße herauszufiltern. Deshalb kann diese Vorfiltrierung mit dem ersten Filter im Wesentlichen rein mechanischer Natur sein. Das erste Filter kann insbesondere bei einer Ausführungsform der Erfindung als Sieb ausgebildet sein. Bei Weiterbildungen der Erfindung ist es möglich, wenigstens zwei Siebe als Teilfilter vorzusehen und diese in Serie zu schalten, sodass das zu filternde Bienenwachs zunächst das eine Teilfilter und dann das zweite Teilfilter bzw. die weiteren Teilfilter durchfließen kann.

Insbesondere können die Siebe von unterschiedlicher Öffnungsgröße sein. Vorzugsweise ist das erste Teilfilter, das durchflossen wird, so ausgebildet, dass es die größte öffnungsgröße, das heißt die größten Sieblöcher aufweist. Diese Anordnung ist deshalb von Vorteil, weil somit die Stoffe ihrer Größe nach herausgefiltert werden können, bis beim letzten Sieb in der Serie nur noch die Stoffe mit den kleinsten Korngrößen hängen bleiben. Eine Serienschaltung der Teilfilter führt insbesondere dazu, dass das erste Filter nicht so schnell ausgetauscht bzw. reaktiviert werden muss. Außerdem ist es möglich, gezielt spezielle Stoffe einer charakteristischen Korngröße herauszufiltern, in dem entsprechende Siebe als Teilfilter eingesetzt werden. In Rohbienenwachs sind oftmals alle möglichen Verunreinigungen enthalten, bis hin zu Bienenkadavern.

Das erste Filter kann beispielsweise ein mit Durchlässen versehenes Edelstahlfilter sein. Grundsätzlich kann es sich aber auch um einen Papierfilter handeln. Des Weiteren ist denkbar, das geschmolzene Bienenwachs durch ein schwammartiges Gebilde oder durch ein Granulat fließen zu lassen. Der Durchfluss durch ein Granulat könnte darüber hinaus den Vorteil besitzen, dass dann, wenn eine Bewegung der Granulatkörner möglich ist, diese Bewegung zusätzlich für eine weitere mechanische Reinigung oder für eine Zertrümmerung von Agglomeraten verwendet bzw. genutzt werden kann. Diese Bewegung kann durch das gepumpte Bienenwachs, welches das erste Filter durchströmt, selbst erfolgen. Wenn die Anwendung hoher Drücke gewünscht ist, kann das Filter insbesondere aus einem robusten Material wie Edelstahl gefertigt sein oder beispielsweise ein Granulat umfassen. Das Granulat kann den Vorteil besitzen, dass die abzureinigenden Stoffe gegebenenfalls noch einmal zermahlen werden können. Sind sehr hohe Drücke anzuwenden, weil es sich um ein besonders hochviskoses Bienenwachs handelt oder weil besonders intensive Reinigungsverfahren notwendig sind, so sollten Edelstahlfilter oder Granulatfilter verwendet werden. Papierfilter besitzen den Vorteil, dass diese in der Regel sehr engmaschig sind und Stoffe kleiner Korngrößen herausgefiltert werden können.

Je nach Anwendung kann das zweite Filter in einem Druckbehälter angeordnet sein, besonders dann, wenn das Bienenwachs mit relativ hohem Druck durch das zweite Filter hindurchgedrückt werden soll. Um eine besonders gründliche Reinigung mittels des zweiten Filters zu erreichen, können Aktivkohlefilter mit besonders dichter Aktivkohlepackung vorgesehen sein. Das bedeutet, dass die Filtergehäuse gegebenenfalls mit einer großen Menge an Aktivkohle bzw. Aktivkohlegranulat befüllt sein können. Denkbar ist darüber hinaus, dass die zu durchfließende Strecke durch das Filtergehäuse relativ lang ist, damit eine ausreichende Filterung und ein ausreichender Kontakt mit der Aktivkohle gewährleistet werden kann.

Im Übrigen wird darauf verwiesen, dass auch das zweite Filter mehrere in Reihe geschaltete Teilfilter umfassen kann. Es ist zum Beispiel denkbar, das zweite Filter als Filterstapel mit mehreren im Wesentlichen scheibenförmigen Teilfiltern auszuführen, wobei jedes Teilfilter eine mit Aktivkohle befüllte Kammer umfasst oder aus dieser besteht.

Eine weitere Abreinigung bzw. Vorfiltration kann während des Schmelzvorgangs vorgenommen werden. Dazu kann eine Abreinigungsflüssigkeit während des Schmelzens oder sogar vor dem Schmelzen hinzugefügt werden. Die Abreinigungsflüssigkeit dient im Sinne der Erfindung grundsätzlich dazu, eine Reinigung im eigentlichen Sinne durchzuführen, also zum Beispiel Verschmutzungen zu lösen bzw. Schmutzpartikel aufzunehmen und wegzuspülen. Des Weiteren kann unter einer Abreinigungsflüssigkeit eine Flüssigkeit verstanden werden, die zum Beispiel Brutparasiten bekämpft, die im Roh-Wachs enthalten sein können. Denkbar ist insbesondere, Wasser oder ein Gemisch aus Wasser und einer Säure und/oder Lauge als Abreinigungsflüssigkeit zu verwenden. Vorzugsweise kann ein Gemisch aus Wasser und Oxalsäure verwendet werden, um eine derartige Abreinigung vorzunehmen, zumal eine derartige Lösung sowohl Verschmutzungen lösen und Schmutzpartikel wegspülen kann als auch Brutparasiten beseitigen kann.

Das Schmelzen des Bienenwachses kann auf verschiedene Art und Weise erfolgen. Es muss allerdings behutsam vorgenommen werden, damit das Wachs nicht beschädigt wird und die langkettigen Moleküle, insbesondere Ester nicht zerstört werden. Bienenwachs wird in der Regel bei 62° bis 65° C flüssig. Vorzugsweise wird bei dem erfindungsgemäßen Verfahren eine Temperatur von 74° C oder höher verwendet. Um das Bienenwachs nicht zu beschädigen, kann bei Verwendung höherer Temperaturen, die bis zu 170° C erreichen können, der Vorgang bei hohen Drücken erfolgen, beispielsweise im Autoklav. Bei einer besonders bevorzugten Variante des Verfahrens wird ein Schmelzvorgang über Nacht vorgenommen, wobei die Temperatur von Raumtemperatur bis zu einer Temperatur von 98° C gesteigert wird. Dieses besonders lange Erhitzen des Bienenwachses erfolgt sehr schonend, wobei die Temperatur so gewählt ist, dass einerseits das Bienenwachs durch die Temperatur nicht allzu stark beschädigt werden kann und andererseits das Wasser, das als Abreinigungsmittel oder als Bestandteil des Abreinigungsmittels hinzugegeben wird, noch nicht kocht, sodass der Dampfdruck im Schmelzbehälter nicht zu groß wird. Bei höheren Temperaturen wäre es zumindest notwendig, den Vorgang in einem entsprechenden Druckbehälter durchzuführen. Um eine erste Abreinigung beim Schmelzen in effektiver Weise erreichen zu können, sollte das Abreinigen beim Schmelzvorgang mindestens 1,5 Stunden dauern. Falls das Bienenwachs relativ stark verschmutzt ist, kann der Vorgang gegebenenfalls auch bis zu 24 Stunden dauern. Die Zeitdauer der Erhitzung wird vorteilhafterweise nach dem Verschmutzungsgrad gewählt (je stärker verschmutzt, desto länger).

Ein Schmelzen und Erhitzen auf hohe Temperaturen auf ca. 130 bis 170° C sollte jedoch in der Regel nur kurzzeitig erfolgen und auch unter Druck im Autoklav, wobei unter solchen Bedingungen ebenfalls davon ausgegangen werden kann, dass das Bienenwachs grundsätzlich nicht oder nur geringfügig beschädigt wird. Bei einem Schmelz- und Abreinigungsvorgang über längere Zeit hinweg sollten niedrigere Temperaturen, beispielsweise zwischen 74° und 98° C gewählt werden. Auf diese Weise wird das Bienenwachs möglichst schonend vorgereinigt. Dieser erste Reinigungsschritt während des Schmelzens kann bei einem Ausführungsbeispiel der Erfindung eine Abtrennung der Abreinigungsflüssigkeit vom Bienenwachs erfolgen, wobei insbesondere das Bienenwachs als Überstand abgelassen oder abgeschöpft wird. Wird Wasser oder eine wässrige Lösung als Abreinigungsmittel verwendet, so sammelt sich das Wasser bzw. die wässrige Lösung mit der Zeit am Boden, während das Bienenwachs oben auf dem Wasser als Überstand schwimmt. Denn das Bienenwachs selbst hat regelmäßig eine etwas geringere Dichte als Wasser, wobei die Dichte des Bienenwachses je nach dessen Art leicht unterschiedlich sein kann. Das Wasser kann am Boden abgelassen werden. Vorteilhaft ist es jedoch insbesondere, das Bienenwachs als überstand abzunehmen bzw. mit einem seitlich am Behälter oder an der Wanne angebrachten Ausfluss das Bienenwachs abzulassen. Grundsätzlich kann es auch abgeschöpft werden. Dieser weitere Schritt des vorfiltrierens sorgt insbesondere dafür, dass das Bienenwachs noch besser abgereinigt werden kann und einen noch höheren Reinigungsgrad erhält. Darüber hinaus kann diese Vorreinigung dazu beitragen, dass das erste Filter oder das zweite Filter gemäß dem erfindungsgemäßen Verfahren weniger schnell verdrecken und eine längere Lebensdauer besitzen bzw. nicht so schnell gereinigt werden müssen. Zudem wird ermöglicht, dass Stoffe abgereinigt werden, die auch mit Aktivkohle nur schwer herausgefiltert werden oder welche die Poren der Aktivkohle gegebenenfalls auch zusetzen können, zumal die Aktivkohle im Wesentlichen Giftstoffe und Arzneimittel sowie Schädlingsbekämpfungsmittel herausfiltern soll.

Oxalsäure dient insbesondere dazu, gegen Bienenparasiten und Brutparasiten wie gegen Milben und deren Rückstände vorzugehen. Des Weiteren kann oftmals auch Milchsäure oder Ameisensäure eingesetzt werden. Diese Säuren bzw. deren Salze kommen zum Teil im Stoffwechsel von Menschen und Tieren vor, sodass die Belastung durch diese Stoffe für Mensch und Tier in Grenzen gehalten werden kann.

Um ein Verstopfen des ersten Filters, welches im Wesentlichen als mechanisch wirkendes Filter bzw. als Sieb ausgebildet ist, verhindern zu können, kann dem Bienenwachs auch in diesem vorfiltrierschritt Wasser hinzugefügt werden, welches zum einen wasserlösliche Bestandteile lösen und aufnehmen kann, zum anderen aber auch größere Bestandteile, die nicht löslich oder inert sind, aufnehmen kann. Diese herauszufilternden Stoffe können sich dann zusammen mit dem Wasser absetzen, weil sich das Wasser ohnehin aufgrund seiner höheren Dichte und aufgrund der Tatsache, dass das Bienenwachs hydrophob ist und sich in Wasser nicht löst, als eigene Phase unten absetzt. Das Wasser sammelt sich somit am Boden an und wird gelöste Stoffe, welche wasserlöslich sind, sowie andere Verunreinigungen mit sich mitführen und am Boden ablagern. Auf diese Weise wird das Bienenwachs zum einen durch das Wasser gefiltert und zum anderen kann es durch das erste Filter selbst, beispielsweise die Siebvorrichtungen, gefiltert werden. Durch diese Filterung wird der Abreinigungsvorgang noch einmal wesentlich verbessert.

Zudem wird mit diesem Ausführungsbeispiel der Erfindung dem Vorurteil begegnet werden, dass Wasser dem zu verarbeitenden Bienenwachs nach Möglichkeit nicht hinzugefügt werden sollte. Wasser kann grundsätzlich beim Verpressen oder Vergießen des Bienenwachses in späteren Verarbeitungsschritten zu Problemen führen, sodass die entsprechenden Gieß- oder Pressvorrichtungen gründlich und damit sehr aufwändig gereinigt werden müssen. Durch die Filtrierung, insbesondere mit mehreren Filtern, kann jedoch erreicht werden, dass sich das Wasser nach und nach absondern kann, da es sich aufgrund der hydrophoben Eigenschaft des Bienenwachses in einem solchen Gemenge stets absondern wird. Es ist daher durch Anwendung dieses Ausführungsbeispiels der Erfindung möglich, das Bienenwachs vom Wasser zu trennen. Die Absonderung wird im vorliegenden Fall gerade bei einer Hintereinanderschaltung mehrerer Teilfilter, insbesondere mehrerer Siebe, begünstigt, da die Siebe als mechanische Barrieren noch einmal mehr dafür sorgen, dass sich Wasser abtrennen und am Boden als Satz ablagern kann. Im Wasser gelöste und von ihm mitgenommene Stoffe lagern sich ebenfalls dann am Boden ab und bleiben auch nicht im oberen Bereich, wo sich das Bienenwachs befindet, in den Filtern hängen. Dadurch kann ein Verstopfen der Filter vermieden werden.

Bei einer vorteilhaften Ausführungsform der Erfindung kann somit während des Filtrierens mit dem ersten Filter das Wasser als Bodensatz aufgefangen und während und/oder nach dem Filtrieren mit dem ersten Filter abgelassen werden.

Besonders vorteilhaft ist es, wenn das Filtrieren mit dem zweiten Filter wenigstens teilweise im Aufstrom erfolgt. Das bedeutet, dass das zu filternde Gemenge aus Bienenwachs und anderen Stoffen entgegen der Schwerkraftrichtung durch die Filter hindurchgepumpt wird. Der Transport durch die Filter hindurch kann also nur durch den zusätzlich erzeugten Druck erreicht werden. In der Regel erhöht diese Maßnahme die Filterwirkung, zumal ein einfaches Hindurchfallen durch den Filter nicht ermöglicht wird und ohne aktive Pumpen durch das Filter kein Transport erfolgt. Auch kann dadurch eine Sedimentationstendenz vermieden werden.

Bei einem Ausführungsbeispiel der Erfindung ist es dann möglich, dass dem zweiten Filter etwa ein Zwischenlager in Form eines Behälters vorgeschaltet ist, so dass das im ersten Filter gefilterte Bienenwachs in diesem Zwischenlagerbehälter zwischengelagert wird. Zum einen ist es möglich, eventuell noch vorhandenes Wasser dadurch auszusondern, indem das Bienenwachs noch eine zeitlang im Zwischenlagerbehälter gelagert werden kann. Der Zwischenlagerbehälter kann dazu auch beheizt sein, um den flüssigen Zustand des Bienenwachses aufrecht zu erhalten. Es kann von Vorteil sein, das Bienenwachs zwischenzulagern, damit eine ausreichende Menge zur Verfügung steht, die durch das zweite Filter hindurchgedrückt werden kann, sodass das Bienenwachs nicht mit Umgebungsluft durch das Filter hindurchgepumpt wird. Dies ist insbesondere dann notwendig bzw. vorteilhaft, wenn die einzelnen Verfahrensschritte und besonders die einzelnen Filtrierschritte unterschiedlich lang dauern. Auch dann, wenn das Filtern mit dem zweiten Filter nur vergleichsweise langsam betrieben werden kann, muss das gefilterte Bienenwachs nach der Filtrierung mit dem ersten Filter aufgefangen und zwischengelagert werden. Es ist daher vorteilhaft, wenn zwischen einzelnen Schritten, insbesondere zwischen dem ersten und dem zweiten Filter ein Zwischenlager vorgesehen ist.

Eine erfindungsgemäße Vorrichtung zum Aufreinigen von Bienenwachs umfasst somit insgesamt eine Schmelzvorrichtung zum Schmelzen von Bienenwachs, ein nachgeschaltetes erstes Filter, um Stoffe ab einer bestimmten Korngröße vom Bienenwachs zu trennen sowie ein dem ersten Filter nachgeschaltetes zweites Filter, welches in einer Kammer bevorratete Aktivkohle zum Filtrieren des geschmolzenen Bienenwachses enthält, sowie des Weiteren eine Presse, um das Bienenwachs durch das zweite Filter hindurchzudrücken. Mit einer derartigen Vorrichtung können die Vorteile des erfindungsgemäßen Verfahrens genutzt werden. Des Weiteren kann das zweite Filter einer Ausführungsform der Erfindung in einem Druckbehälter angeordnet sein. Das erste Filter wiederum kann als Sieb ausgebildet sein und insbesondere wenigstens zwei in Serie geschaltete Teilfilter verschiedener Siebgrößen umfassen. Das erste Filter kann eine Spülvorrichtung umfassen, um Bienenwachs mit einer Abreinigungsflüssigkeit zu versehen, insbesondere Wasser. Denkbar ist auch, dass im Zusammenhang mit dem ersten Filter eine Säure oder Lauge zusätzlich zu dem Wasser hinzugefügt wird, gegebenenfalls auch Oxalsäure zur Eindämmung des Brutproblems mit Milben.

Das Verfahren bzw. die Aufreinigungsvorrichtung gemäß der Erfindung kann im Zusammenhang mit einer Vorrichtung zum Gießen und/oder Pressen von geschmolzenem Bienenwachs verwendet werden, insbesondere im Zusammenhang mit einer Kunstwabenpresse zur Fertigung von Wachsplatten oder im Zusammenhang mit einer Maschine zur Fertigung künstlicher Bauhilfen. In der Imkerei kann das Bienenwachs zu Mittelwänden, sogenannten Bauhilfen für neue Bienenwaben eingesetzt werden. Daneben kann das Bienenwachs typischerweise für Kerzen, für das Kunsthandwerk, für verschiedene Kosmetika eingesetzt werden sowie des Weiteren für die Holzbehandlung, für Süßwaren und sonstige pharmazeutische Produkte. Bevor also das Bienenwachs vergossen oder gepresst wird und in Form für typische Anwendungen gebracht wird, kann es durch das erfindungsgemäße Verfahren oder ein Ausführungsbeispiel der Erfindung entsprechend vorteilhaft aufgereinigt werden.

### Ausführungsbeispiel

Ein Ausführungsbeispiel der Erfindung ist in der Zeichnung dargestellt und wird nachstehend unter Angabe weiterer Einzelheiten und Vorteile näher erläutert.

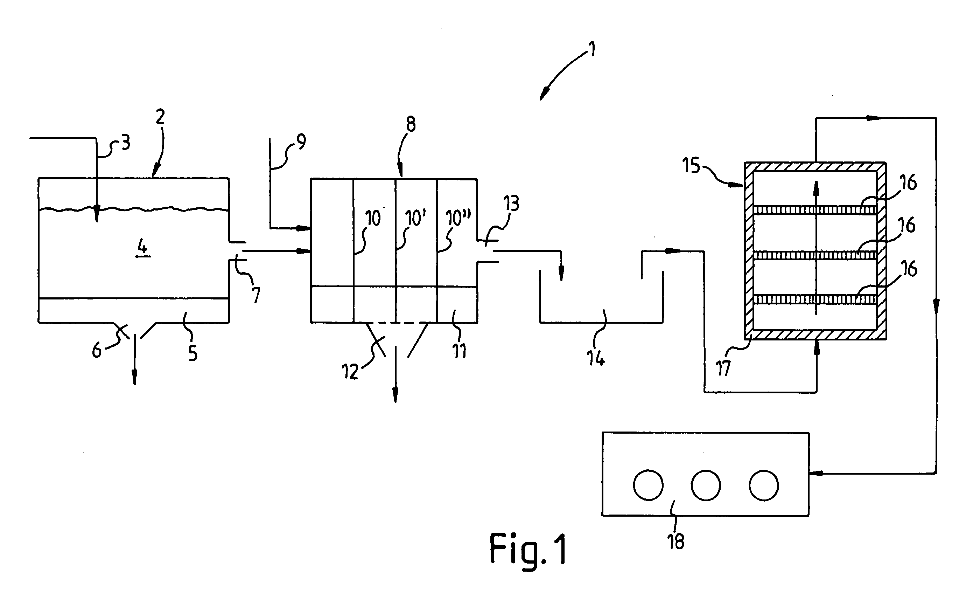

Figur 1 zeigt eine Maschine 1 zur Fertigung künstlicher Bauhilfen, wobei die Bauhilfen als Mittelwände in Bienenstöcken eingesetzt werden können. Das feste Roh-Bienenwachs wird zunächst in eine Schmelzvorrichtung 2 gegeben, und zwar unter Zugabe eines Gemisches aus Wasser und Oxalsäure (Zuführvorrichtung 3). Die Schmelzvorrichtung 2 ist als Druckbehälter ausgebildet und besitzt eine nicht dargestellte Heizvorrichtung, sodass Temperaturen von 130° C (bis maximal 170° C) erreicht werden können. Das Bienenwachs bildet schließlich den Überstand 4, während sich das Wasser am Boden 5 als Satz absetzen kann. Das Wasser 5 kann über den Boden abgelassen werden. Das Bienenwachs wiederum wird über den Auslass 7 als Überstand abgenommen.

Das geschmolzene Bienenwachs wird zum ersten Filter 8 weiter geleitet und dort über die Zufuhrvorrichtung 9 mit zusätzlichem Wasser als Reinigungsflüssigkeit vermengt. Im ersten Filter 8 sind mehrere Teilfilter 10, 10', 10" in Form von Sieben angeordnet. Die Löchergröße bzw. Siebgröße verringert sich zunehmend von Teilfilter 10 nach Teilfilter 10" nach Teilfilter 10''. Dementsprechend können also gröbere Stoffe zunächst abgefangen werden, bis nur noch eine Feinfiltrierung am Filter 10" erfolgt. Im Bereich 11 kann sich das Wasser absetzen. Das Wasser wird grundsätzlich nicht mit dem Bienenwachs mittransportiert, sondern setzt sich lediglich am Boden ab, wobei im Bereich der jeweiligen Filter 10, 10' und 10'' am Boden die im Wasser gelösten bzw. mit dem Wasser mitgenommenen Stoffe am Sieb angelagert werden können. Über eine Auslassvorrichtung 12 kann der Bodensatz bzw. das Wasser zusammen mit den vom Wasser herausgefilterten Stoffen abgelassen werden.

Das gefilterte Bienenwachs gelangt danach über einen Auslass 13 in den Zwischenlagerbehälter 14, in dem es zwischengelagert werden kann. Von dort aus kann es weiter fließen und wird sodann durch eine nicht weiter dargestellte Pumpe im Aufstrom durch das zweite Filter 15 gepumpt. Das zweite Filter 15 umfasst mehrere gestapelte, in Serie Filterkammern 16. Diese Kammern können von dem Bienenwachs unter Druck durchflossen werden und beinhalten ein Aktivkohlegranulat. Die Serienschaltung der Aktivkohlefilter 16 hintereinander ermöglicht eine gesteigerte Filterwirkung. Aufgrund des bei der Filterung im zweiten Filter 15 herrschenden Drucks umfasst das Filter 15 einen Druckbehälter 17, in welchem die Kammern 16 untergebracht sind.

Die Strömungsrichtungen des flüssigen Wachses sind insgesamt durch Pfeile angedeutet. Die einzelnen Gehäuse bzw. Kammern der Aktivkohlefilter 16 sind so ausgebildet, dass das Aktivkohlegranulat selbst nicht hindurchdringen kann und nicht mit dem Bienenwachs mitgenommen wird. Dazu sind die Wände des Gehäuses bzw. der Kammer eines Filters 16 so ausgebildet, dass ihre Durchlässe kleiner sind als die Korngröße des Aktivkohlegranulats. Anschließend wird das aufgereinigte Bienenwachs in die eigentliche Gieß- bzw. Pressvorrichtung 18 weitergeleitet, sodass es dort zu den Bauhilfen weiter verarbeitet, d.h. gegossen bzw. verpresst werden kann.

### Bezugszeichenliste:

- 1: Maschine für künstliche Bauhilfen
- 2: Schmelzvorrichtung
- 3: Zuführvorrichtung
- 4: Wachsüberstand
- 5: Bodensatz
- 6: Bodenauslass
- 7: Auslass für Überstand
- 8: erstes Filter
- 9: Wasserzufuhr
- 10: Sieb
- 10': Sieb
- 10": Sieb
- 11: Bodensatz (Wasser)
- 12: Bodenauslass
- 13: Wachsauslass
- 14: Zwischenlagerungsbehälter
- 15: zweites Filter
- 16: Aktivkohlefilter
- 17: Autoklav
- 18: Gieß-/Pressvorrichtung

## Patentansprüche

1. Verfahren zum Aufreinigen von Bienenwachs, umfassend folgende Verfahrensschritte:
- Schmelzen (2) des Roh-Bienenwachses
- Filtrieren des geschmolzenen Bienenwachses mit einem ersten Filter (8), um Stoffe ab einer bestimmten Korngröße vom Bienenwachs zu trennen,
- mechanisches Drücken des geschmolzenen und mit dem ersten Filter filtrierten Bienenwachses durch ein zweites Filter (15), wobei das zweite Filter wenigstens eine Kammer (16) umfasst, in welcher Aktivkohle zum Filtrieren des geschmolzenen Bienenwachs bevorratet ist und die zum Durchfluss von geschmolzenem Bienenwachs und/oder Gemengen, die geschmolzenes Bienenwachs und Wasser umfassen, ausgebildet ist.

2. Verfahren nach Anspruch 1, **dadurch gekennzeichnet, dass** das erste Filter (8) als Sieb ausgebildet ist und insbesondere wenigstens zwei in Serie geschaltete Teilfilter (10, 10', 10") verschiedener Öffnungsgröße umfasst.

3. Verfahren nach einem der vorgenannten Ansprüche, **dadurch gekennzeichnet, dass** das zweite Filter in einem Druckbehälter (17) angeordnet ist.

4. Verfahren nach einem der vorgenannten Ansprüche, **dadurch gekennzeichnet, dass** vor und/oder während des Schmelzens des Bienenwachses eine Abreinigungsflüssigkeit, insbesondere Wasser oder ein Gemisch aus Wasser und einer Säure und/oder Lauge, vorzugsweise ein Gemisch aus Wasser und Oxalsäure, hinzugefügt wird (3), um das Bienenwachs aufzureinigen und/oder wasserlösliche Stoffe herauszufiltern und/oder Brutparasiten zu beseitigen.

5. Verfahren nach einem der vorgenannten Ansprüche, **dadurch gekennzeichnet, dass** während oder nach dem Schmelzen eine Abtrennung der Abreinigungsflüssigkeit vom Bienenwachs erfolgt, wobei insbesondere das Bienenwachs als Überstand (7) abgelassen oder abgeschöpft wird.

6. Verfahren nach einem der vorgenannten Ansprüche, **dadurch gekennzeichnet, dass** Wasser vor und/oder während des Filtrierens mit dem ersten Filter hinzugefügt wird, um abzureinigende Stoffe aufzufangen, die mit dem ersten Filter herausfiltriert werden.

7. Verfahren nach einem der vorgenannten Ansprüche, **dadurch gekennzeichnet, dass** während des Filtrierens mit dem ersten Filter das Wasser als Bodensatz (11) aufgefangen und während und/oder nach dem Filtrieren mit dem ersten Filter abgelassen wird.

8. Verfahren nach einem der vorgenannten Ansprüche, **dadurch gekennzeichnet, dass** das Filtrieren mit dem zweiten Filter (15) wenigstens teilweise im Aufstrom erfolgt.

9. Verfahren nach einem der vorgenannten Ansprüche, **dadurch gekennzeichnet, dass** dem Filtrieren mit dem zweiten Filter ein Zwischenlagern des im ersten Filter gefilterten Bienenwachses in einem Zwischenlagerbehälter (14) vorgeschaltet wird.

10. Vorrichtung zum Aufreinigen von Bienenwachs (1), umfassend:
- eine Schmelzvorrichtung (2) zum Schmelzen von Bienenwachs,
- ein nachgeschaltetes erstes Filter (8), um Stoffe ab einer bestimmten Korngröße vom Bienenwachs zu trennen
- ein dem ersten Filter nachgeschaltetes zweites Filter (15), welches wenigstens eine Kammer umfasst, in der Aktivkohle zum Filtrieren des geschmolzenen Bienenwachs bevorratet ist und die zum Durchfluss von geschmolzenem Bienenwachs und/oder Gemengen, die geschmolzenes Bienenwachs und Wasser umfassen, ausgebildet ist
- eine Presse, um das Bienenwachs durch das zweite Filter hindurch zu drücken.

11. Vorrichtung nach einem der vorgenannten Ansprüche, **dadurch gekennzeichnet, dass** das zweite Filter in einem Druckbehälter (17) angeordnet ist.

12. Vorrichtung nach einem der vorgenannten Ansprüche, **dadurch gekennzeichnet, dass** das erste Filter (8) als Sieb ausgebildet ist und insbesondere wenigstens zwei in Serie geschaltete Teilfilter (10, 10', 10") verschiedener Öffnungsgröße umfasst.

13. Vorrichtung nach einem der vorgenannten Ansprüche, **dadurch gekennzeichnet, dass** das ersten Filter eine Spülvorrichtung (9, 12) umfasst, um dem Bienenwachs eine Abreinigungsflüssigkeit hinzuzufügen und die Abreinigungsflüssigkeit wieder abzuführen, wobei die Abreinigungsflüssigkeit dazu ausgebildet ist, das Bienenwachs aufzureinigen und/oder wasserlösliche Stoffe herauszufiltern und/oder Brutparasiten zu beseitigen, und wobei die Abreinigungsflüssigkeit insbesondere Wasser oder ein Gemisch aus Wasser und einer Säure und/oder Lauge, vorzugsweise ein Gemisch aus Wasser und Oxalsäure ist.

## Claims

1. Method for purifying beeswax, comprising the following method steps:
- melting (2) of the crude beeswax
- filtration of the molten beeswax with a first filter (8) to separate substances above a certain particle size from the beeswax,
- mechanically pressing the molten beeswax, filtered by the first filter, through a second filter (15), whereby the second filter comprises at least one chamber (16) in which activated carbon is stored in order to filter the molten beeswax, and which is designed for the flow of the molten beeswax and/or mixtures that include molten beeswax and water.

2. Method according to claim 1, **characterised in that** the first filter (8) is designed as a sieve, which comprises in particular at least two series-connected sub-filters (10, 10', 10") of different opening sizes.

3. Method according to any one of the preceding claims, **characterised in that** the second filter is arranged in a pressure vessel (17).

4. Method according to any one of the preceding claims, **characterised in that** before and/or during the melting of the beeswax, a purification liquid, in particular water or a mixture of water and an acid and/or alkali, preferably a mixture of water and oxalic acid, is added (3) in order to purify the beeswax and/or filter out water-soluble materials and/or eliminate brood parasites.

5. Method according to any one of the preceding claims, **characterised in that** during or after the separation of the melts, separation of the purification liquid from the beeswax is carried out, whereby the beeswax is drained or siphoned off in particular as a supernatant (7).

6. Method according to one of the preceding claims, **characterised in that** before and/or during the filtration, water is added to the first filter in order to absorb substances filtered out by the first filter.

7. Method according to any one of the preceding claims, **characterised in that** during filtration with the first filter, the water is collected as sediment (11), and is discharged during and/or after filtering with the first filter.

8. Method according to any one of the preceding claims, **characterised in that** the filtering with the second filter (15) is at least partially carried out in the upflow.

9. Method according to any one of the preceding claims, **characterised in that** intermediate storage for the beeswax filtered in the first filter is effected in an intermediate storage container (14) connected upstream of the filtration using the second filter.

10. Device for purifying beeswax (1), comprising:
- a melting device (2) for the melting of beeswax,
- a downstream first filter (8) to separate substances above a certain particle size from the beeswax
- a second filter (15) connected downstream of the first filter comprises at least one chamber in which activated carbon is stored in order to filter the molten beeswax, and which is designed for the flow of the molten beeswax and/or mixtures that include molten beeswax and water
- a press to press the beeswax through the second filter.

11. Device according to one of the preceding claims, **characterised in that** the second filter is arranged in a pressure vessel (17).

12. Device according to any one of the preceding claims, **characterised in that** the first filter (8) is designed as a sieve, and comprises in particular at least two series-connected sub-filters (10, 10', 10") of different opening sizes.

13. Device according to one of the preceding claims, **characterised in that** the first filter comprises a flushing device (9, 12) in order to add a purification liquid to the beeswax and then to discharge the purification liquid again, whereby the purification liquid is designed to purify the beeswax and/or filter out water-soluble materials and/or eliminate brood parasites, and whereby the purification liquid is in particular water or a mixture of water and an acid and/or alkali, preferably a mixture of water and oxalic acid.

## Revendications

1. Procédé de nettoyage de cire d'abeille, comprenant les étapes suivantes :
- fusion (2) de la cire d'abeille brute
- filtrage de la cire d'abeille fondue avec un premier filtre (8), afin de séparer les substances de la cire d'abeille à partir d'une taille de grains déterminée,
- pressage mécanique de la cire d'abeille fondue et filtrée avec le premier filtre à travers un deuxième filtre (15), ce deuxième filtre comprenant au moins une chambre (16), dans laquelle du charbon actif est mis en réserve pour le filtrage de la cire d'abeille fondue et qui est conçu pour l'écoulement de la cire d'abeille fondue et/ou de mélanges contenant de la cire d'abeille fondue et de l'eau.

2. Procédé selon la revendication 1, **caractérisé en ce que** le premier filtre (8) est conçu comme un tamis et comprend, plus particulièrement, au moins deux filtres partiels (10, 10', 10") branchés en série de tailles d'ouvertures différentes.

3. Procédé selon l'une des revendications précédentes, **caractérisé en ce que** le deuxième filtre se trouve dans un récipient sous pression (17).

4. Procédé selon l'une des revendications précédentes, **caractérisé en ce que** avant et/ou pendant la fusion de la cire d'abeille, un liquide de nettoyage, plus particulièrement de l'eau ou un mélange d'eau et d'un acide et/ou d'une base, de préférence un mélange d'eau et d'acide oxalique, est ajouté (3) afin de nettoyer la cire d'abeille et/ou de filtrer les matières solubles dans l'eau et/ou d'éliminer les parasites.

5. Procédé selon l'une des revendications précédentes, **caractérisé en ce que** pendant ou après la fusion, a lieu une séparation du liquide de nettoyage de la cire d'abeille, la cire d'abeille étant plus particulièrement évacuée ou décantée en tant que trop-plein (7).

6. Procédé selon l'une des revendications précédentes, **caractérisé en ce que** de l'eau est ajoutée avant et/ou pendant le filtrage avec le premier filtre, afin de capturer les matières à éliminer qui sont filtrées avec le premier filtre.

7. Procédé selon l'une des revendications précédentes, **caractérisé en ce que** pendant le filtrage avec le premier filtre, l'eau est capturée en tant que sédiment (11) et est évacuée pendant et/ou après le filtrage avec le premier filtre.

8. Procédé selon l'une des revendications précédentes, **caractérisé en ce que** le filtrage avec le deuxième filtre (15) a lieu au moins partiellement dans le flux ascendant.

9. Procédé selon l'une des revendications précédentes, **caractérisé en ce que**, avant le filtrage avec le deuxième filtre, la cire d'abeille filtrée avec le premier filtre est entreposée dans un récipient d'entreposage (14).

10. Dispositif de nettoyage de cire d'abeille (1), comprenant :
- un dispositif de fusion (2) pour la fusion de la cire d'abeille,
- un premier filtre (8) situé en aval, afin de séparer les matières de la cire d'abeille à partir d'une taille de grains déterminée
- un deuxième filtre (15), situé en aval du premier filtre, qui comprend au moins une chambre, dans laquelle du charbon actif est mis en réserve pour le filtrage de la cire d'abeille fondue et qui est conçue pour l'écoulement de la cire d'abeille fondue et/ou de mélanges contenant de la cire d'abeille fondue et de l'eau.
- une presse pour presser la cire d'abeille à travers le deuxième filtre.

11. Dispositif selon l'une des revendications précédentes, **caractérisé en ce que** le deuxième filtre se trouve dans un récipient sous pression (17).

12. Dispositif selon l'une des revendications précédentes, **caractérisé en ce que** le premier filtre (8) est conçu comme un tamis et comprend, plus particulièrement, au moins deux filtres partiels (10, 10', 10") branchés en série, de tailles d'ouvertures différentes.

13. Dispositif selon l'une des revendications précédentes, **caractérisé en ce que** le premier filtre comprend un dispositif de rinçage (9, 12) permettant d'ajouter à la cire d'abeille un liquide de nettoyage et d'évacuer à nouveau le liquide de nettoyage, le liquide de nettoyage étant conçu pour nettoyer la cire d'abeille et/ou pour filtrer les substances solubles dans l'eau et/ou pour éliminer les parasites et le liquide de nettoyage étant plus particulièrement de l'eau ou un mélange d'eau et d'un acide et/ou d'une base, de préférence un mélange d'eau et d'acide oxalique.
